# EUROPEAN PATENT APPLICATION

(11) **EP 4 800 896 A1**
(43) Date of publication of application: **02.09.2026**
(21) Application number: 26157610.2
(22) Date of filing: 10.02.2026
(51) Int. Cl.: H02K 11/042, H01F 38/18

(54) **CONTACTLESS WOUND-FIELD ROTOR**

(30) Priority: 28.02.2025 JP 2025031963
(71) Applicant: AISIN CORPORATION, Aichi 448-8650 (JP)
(72) Inventor: Mutsuura, Keita, Aichi, 448-8650 (JP); Kitao, Takuya, Aichi, 448-8650 (JP)
(74) Representative: Kramer Barske Schmidtchen Patentanwälte PartG mbB

(57) **Abstract**

Rectifying elements (D1 to D4) are arranged in such a way as to be less likely to be affected by centrifugal force in a contactless wound-field rotor. Disclosed is the contactless wound-field rotor including a rotor shaft (318), a rotor core (312) around which a coil wire is wound, and a power receiving device (70) receiving power supply in a contactless manner from a power supply device on a non-rotating side, in which the power receiving device (70) includes a plurality of rectifying elements (D1 to D4) arranged in an axial direction in such a way as to extend through a rotation axis (I) of a rotor (310), and a wiring member (91 to 94) electrically connecting the power supply device and the coil wire through the rectifying element (D1 to D4).

## Description

### TECHNICAL FIELD

This disclosure generally relates to a contactless wound-field rotor.

### BACKGROUND DISCUSSION

A known technique for disposing an entire rectifier, including a rectifying element, close to a rotor rotation axis in a contactless wound-field rotor is disclosed in, for example, WO2023/072462A1 (Reference 1).

However, the rectifying element in the conventional technique as described above is close to but apart from the rotor rotation axis and therefore may not be able to appropriately cope with an increase in centrifugal force associated with higher motor rotation speed, which leaves room for improvement.

A need thus exists for a contactless wound-field rotor in which a rectifying element is disposed in such a way as to be less likely to be affected by centrifugal force.

### SUMMARY

According to an aspect of this disclosure, provided is a contactless wound-field rotor including
a rotor shaft,
a rotor core around which a coil wire is wound, and
a power receiving device receiving power supply in a contactless manner from a power supply device on a non-rotating side, in which
the power receiving device includes
   a plurality of rectifying elements arranged in an axial direction in such a way as to extend through a rotation axis of a rotor and
   a wiring member electrically connecting the power supply device and the coil wire through the rectifying element.

According to the aspect of this disclosure, rectifying elements can be arranged in such a way as to be less likely to be affected by centrifugal force in a contactless wound-field rotor.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is a configuration diagram illustrating a vehicle drive system including a rotating electric machine according to this embodiment;
FIG. 2 is a schematic cross-sectional view illustrating a part of a cross-section of the rotating electric machine;
FIG. 3 is a cross-sectional view illustrating a configuration of related parts at an axial end of a rotor;
FIG. 4 is a diagram schematically illustrating an example of a configuration of a rectifying device including a rectifying circuit;
FIG. 5 is a two-view diagram illustrating a substrate viewed in a direction normal to a substrate surface;
FIG. 6 is a cross-sectional view taken along a line VI-VI in FIG. 5;
FIG. 7 is a cross-sectional view taken along a line VII-VII in FIG. 5;
FIG. 8 is a plan view viewed from an X1 side, illustrating an arrangement (orientations, and positions in a direction of rotation) of substrates;
FIG. 9 is a diagram illustrating each wiring member fixed to a notch of each substrate;
FIG. 10 is a cross-sectional view taken along a section passing through a pair of specific wiring members and a central axis;
FIG. 11 is a cross-sectional view taken along a section passing through another pair of specific wiring members and the central axis; and
FIG. 12 is a diagram schematically illustrating another example of the configuration of the rectifying device including a rectifying circuit.

### DETAILED DESCRIPTION

Embodiments are described in detail below with reference to the attached drawings. Note that scales used in the drawings are strictly examples, and the embodiments are not limited thereto; and the shapes and the like in the drawings may be partially exaggerated for convenience of description. Further, only some of a plurality of parts with the same attributes may be given reference signs in the drawings for better recognizability.

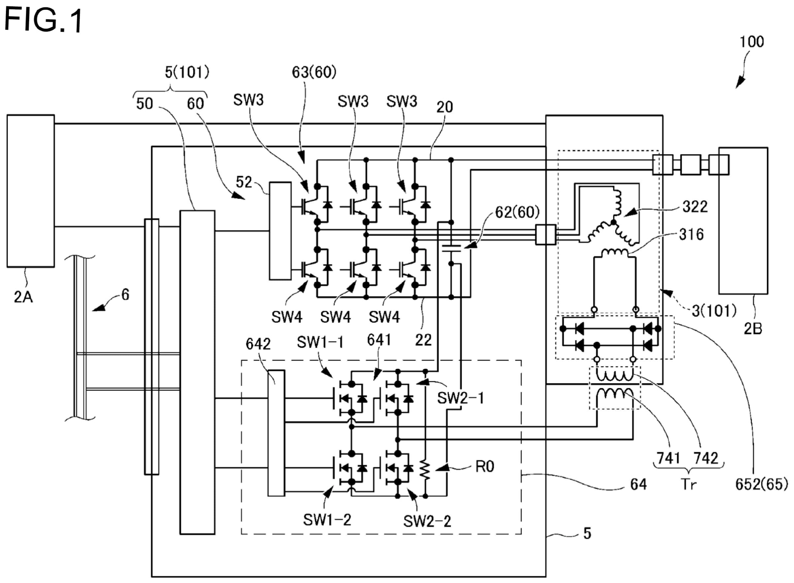

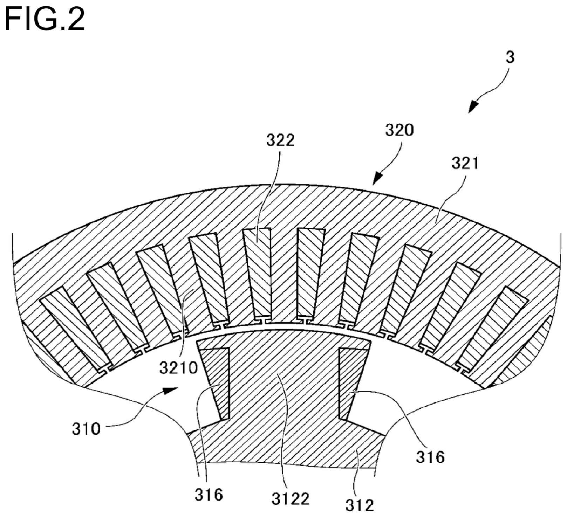

FIG. 1 is a configuration diagram illustrating a vehicle drive system 100 including a rotating electric machine 3 according to this embodiment. FIG. 2 is a schematic cross-sectional view illustrating a part of a cross-section of the rotating electric machine 3.

The vehicle drive system 100 has a dual-power-supply configuration including a low-voltage battery 2A and a high-voltage battery 2B and includes a vehicle drive device 101. The vehicle drive device 101 includes the rotating electric machine 3 and a drive device 5.

For example, the low-voltage battery 2A is a lead battery with a rated voltage of 12 V.

For example, the high-voltage battery 2B is a lithium-ion battery with a rated voltage significantly higher than that of the low-voltage battery 2A, such as 40 V or higher. As an example, the rated voltage of the high-voltage battery 2B is assumed to be 300 V or higher in this embodiment. Note that the high-voltage battery 2B may be implemented as a fuel cell or the like.

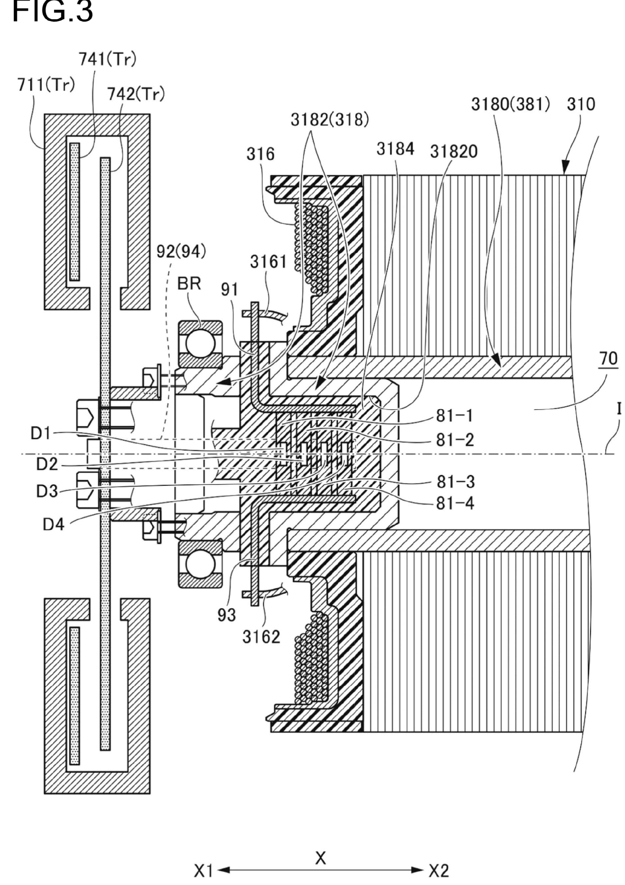

The rotating electric machine 3 is a wound-field type with a rotor 310 including a rotor core 312, a rotor coil 316, and a rotor shaft 318 (see FIG. 3 to be described later). The rotor coil 316 is formed by winding a coil wire for a field coil around the rotor core 312. Note that the rotor core 312 includes a tooth portion 3122 protruding radially outward; and the coil wire for a field coil forming the rotor coil 316 is wound around the tooth portion 3122, as illustrated in FIG. 2. A stator 320 is provided on the radially outer side of the rotor 310. A coil wire forming a stator coil 322 is wound around a tooth portion 3210 of a stator core 321, as illustrated in FIG. 2.

The drive device 5 includes a microcomputer 50 and an electric circuit unit 60.

For example, the microcomputer 50 may be implemented as an electronic control unit (ECU). The microcomputer 50 is connected to various electronic parts (other ECUs and sensors) in the vehicle through a network 6 such as a controller area network (CAN).

The microcomputer 50 receives various commands, such as a control command from a higher level ECU (not illustrated), through the network 6. The microcomputer 50 controls the rotating electric machine 3 through the electric circuit unit 60 in accordance with the control command. The microcomputer 50 operates based on electric power from the low-voltage battery 2A.

The electric circuit unit 60 includes a smoothing capacitor 62, a power conversion circuit unit 63, a power supply circuit unit 64, and a power receiving circuit unit 65. The power supply circuit unit 64 and the power receiving circuit unit 65 cooperate with a transformer Tr to implement a function for supplying electric power to the rotor coil 316 in a contactless manner. The configuration above can eliminate wear and enhance reliability (e.g., durability), unlike a configuration for supplying power in a contact manner. The transformer includes a primary coil 741 and a secondary coil 742.

The smoothing capacitor 62 is provided between a high-potential line 20 and a low-potential line 22 of the high-voltage battery 2B. A resistor R0 for passive discharge may be connected between both ends of the smoothing capacitor 62 in parallel with the smoothing capacitor 62.

The power conversion circuit unit 63 takes the form of an inverter and, for example, forms a three-phase bridge circuit. The power conversion circuit unit 63 supplies three-phase alternating-current power to the stator 320 of the rotating electric machine 3 under the control of the microcomputer 50. The power conversion circuit unit 63 is connected between the high-potential line 20 and the low-potential line 22 in such a way as to be parallel with the smoothing capacitor 62. The power conversion circuit unit 63 includes switching elements SW3 on an arm on the high-potential side and switching elements SW4 on an arm on the low-potential side. Note that the power conversion circuit unit 63 is controlled by the microcomputer 50 through a drive circuit unit 52.

The power supply circuit unit 64 includes a bridge circuit unit 641 and a drive circuit unit 642.

The bridge circuit unit 641 is connected between the high-potential line 20 and the low-potential line 22 in such a way as to be parallel with the smoothing capacitor 62 and the resistor R0 for passive discharge. The bridge circuit unit 641 takes the form of a full bridge circuit and includes switching elements SW1-1 and SW1-2 and switching elements SW2-1 and SW2-2.

The switching elements SW1-1 and SW1-2 are connected in series between the high-potential line 20 and the low-potential line 22. One end of the primary coil 741 is connected between the switching elements SW1-1 and SW1-2. The switching elements SW2-1 and SW2-2 are connected in series between the high-potential line 20 and the low-potential line 22 in such a way as to be parallel with the switching elements SW1-1 and SW1-2. The other end of the primary coil 741 is connected between the switching elements SW2-1 and SW2-2. In the following, a configuration related to the switching elements SW1-1 and SW2-1 of the switching elements SW1-1, SW1-2, SW2-1, and SW2-2 may be hereinafter designated as "high-potential side" for distinction, and a configuration related to the switching elements SW1-2 and SW2-2 may be designated as "low-potential side."

The on and off states of the switching elements SW1-1, SW1-2, SW2-1, and SW2-2 are switched through the drive circuit unit 642. The switching elements SW1-1, SW1-2, SW2-1, and SW2-2 change the energized state of the rotor coil 316 under the control of the drive circuit unit 642. For example, the switching elements SW1-1, SW1-2, SW2-1, and SW2-2 are insulated gate bipolar transistors (IGBTs) but may also take other forms such as metal oxide semiconductor field-effect transistors (MOSFETs).

The drive circuit unit 642 supplies electric power to the rotor coil 316 through the power receiving circuit unit 65 by driving the gates of the switching elements SW1-1, SW1-2, SW2-1, and SW2-2 in accordance with control signals from the microcomputer 50.

The power receiving circuit unit 65 includes a rectifying circuit 652.

The rectifying circuit 652 is electrically connected between the transformer Tr and the rotor coil 316. The rectifying circuit 652 rectifies current from the secondary side of the transformer Tr (drive current) and supplies the rectified current to the rotor coil 316. The rectifying circuit 652 may be a diode bridge circuit, as illustrated in FIG. 1.

Next, a distinctive configuration of this embodiment is described mainly referring to FIG. 3.

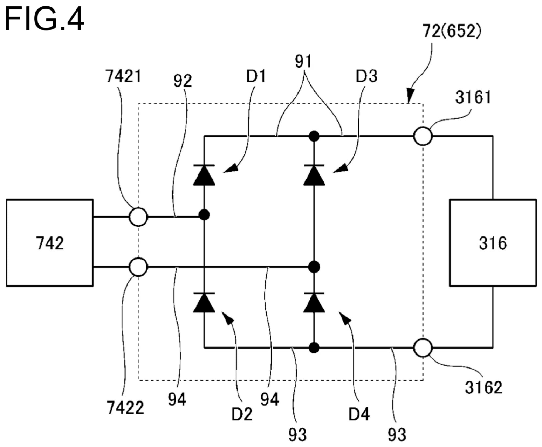

FIG. 3 is a cross-sectional view illustrating a configuration of related parts at an axial end of the rotor 310. In FIG. 3, illustration of the stator 320 is omitted. FIG. 4 is a diagram schematically illustrating a configuration of a rectifying device 72 including the rectifying circuit 652.

In the following description, an axial direction refers to a direction in which a central axis I (see FIG. 3, etc.) forming the rotation axis of the rotor 310 (a rotor rotation axis) extends; and a radial direction refers to a radial direction around the central axis I. Accordingly, a radially outer side refers to a side farther from the central axis I relative to the position, and a radial inner side refers to a side closer to the central axis I relative to the position. Further, an X direction parallel with the axial direction is defined in FIG. 3 and other diagrams. An axial outer side refers to a side farther from the axial center of the rotor 310, and an axial inner side refers to a side closer to the axial center of the rotor 310 relative to the position. Further, a circumferential direction corresponds to the direction of rotation around the central axis I.

In this embodiment, a power receiving device 70 is provided at an axial end of the rotor 310.

The power receiving device 70 receives power supply in a contactless manner from a power supply device on the non-rotating side. The power supply device on the non-rotating side includes the power supply circuit unit 64 and the primary coil 741 of the transformer Tr that are described above. Note that the primary coil 741 of the transformer Tr may be provided on a ferrite core 711 on the non-rotating side. In this case, the ferrite core 711 is fixed to the case of the rotating electric machine 3 (not illustrated) or is fixed to a support member (e.g., a cover) fixed to the case (not illustrated).

The power receiving device 70 includes the secondary coil 742 of the transformer Tr and the rectifying device 72 related to the rectifying circuit 652.

The secondary coil 742 is provided on a toroidal coil substrate 722 on the rotating side. The secondary coil 742 may take the form of a wiring pattern formed on the coil substrate 722.

In this embodiment, the rectifying device 72 is disposed in such a way that the shaft center of the rotor shaft 318 (the central axis I) penetrates diodes D1 to D4 (rectifying elements). Specifically, chips of the diodes D1 to D4 in the rectifying device 72 are provided in such a way that the central axis I penetrates the chips. In this case, centrifugal force that may act on the chips of the diodes D1 to D4 due to rotation of the rotor shaft 318 can be practically minimized. For example, the rectifying device 72 may be disposed in such a relationship that the centroid or the center of gravity of each of the chips of the diodes D1 to D4 approximately matches the shaft center of the rotor shaft 318.

In this embodiment, the diodes D1 to D4 are provided on substrates 81-1 to 81-4, respectively. In other words, the diode D1 is provided on the substrate 81-1, the diode D2 is provided on the substrate 81-2, and so on.

The substrates 81-1 to 81-4 are arranged in an axial direction. The substrates 81-1 to 81-4 may be arranged in an axial direction with axial gaps therebetween or may be stacked without axial gaps. The substrates 81-1 to 81-4 may have a circular shape when viewed in the axial direction; and in this case, the substrates 81-1 to 81-4 may be arranged in such a way that the shaft center of the rotor shaft 318 (the central axis I) penetrates the centers of the circles. In a modified example, the substrates 81-1 to 81-4 may be noncircular when viewed in the axial direction; and in this case, the substrates 81-1 to 81-4 may be arranged in such a way that the shaft center of the rotor shaft 318 (the central axis I) penetrates the centroids or the centers of gravity of the substrates.

In this embodiment, the substrates 81-1 to 81-4 are provided on a sub-shaft 3182 fixed to an end of the main shaft 3180 of the rotor shaft 318, as illustrated in FIG. 3. The sub-shaft 3182 is fixed to an X1-side end of the main shaft 3180. For example, the sub-shaft 3182 may be press-fitted into a hollow portion of the main shaft 3180. The sub-shaft 3182 is rotatably supported by the case (not illustrated) through bearings BR. In a modified example, the main shaft 3180 may be rotatably supported by the case (not illustrated) through the bearings, instead of or in addition to the sub-shaft 3182.

The sub-shaft 3182 includes a recessed portion 31820 extending to the hollow portion of the main shaft 3180, and the substrates 81-1 to 81-4 may be provided in the recessed portion 31820. The substrates 81-1 to 81-4 may be fixed by a resin-molded portion 3184 in the recessed portion 31820.

The diodes D1 to D4 may be of a type mounted on the surfaces of the substrates 81-1 to 81-4 but are preferably embedded in the substrates 81-1 to 81-4, as described below. In this case, the diodes D1 to D4 and wiring connected thereto can be better protected compared with the case in which the diodes are mounted on the surfaces of the substrates 81-1 to 81-4. Further, detachment of the diodes D1 to D4 from the substrates 81-1 to 81-4 can be prevented unlike the case in which the diodes are mounted on the surfaces of the substrates 81-1 to 81-4.

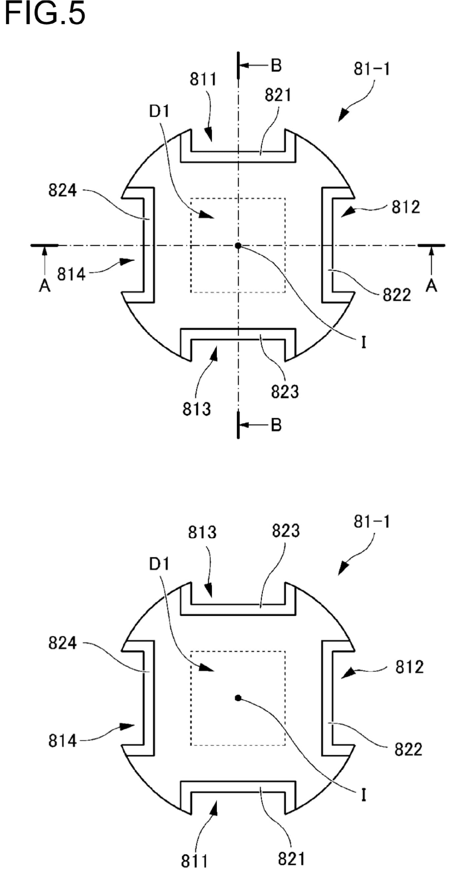

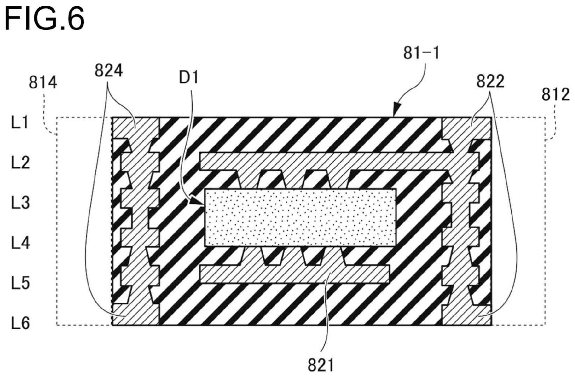

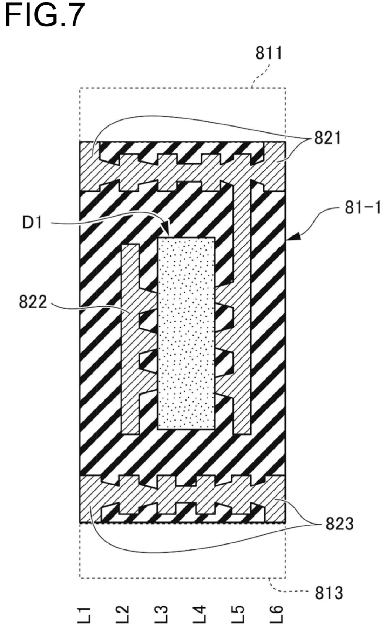

FIG. 5 is a two-view diagram illustrating both sides of a substrate 81 when viewed in a direction normal to the substrate surface. Note that the direction normal to the substrate surface is parallel with the axial direction. FIG. 6 is a cross-sectional view taken along a line A-A in FIG. 5. FIG. 7 is a cross-sectional view taken along a line B-B in FIG. 5. The substrate 81-1 of the substrates 81-1 to 81-4 is mainly described with reference to FIGS. 5 to 7. Note that the configurations of the substrates 81-2 to 81-4 may be practically the same except for the differences in the diodes disposed in place of the diode D1 (the diodes D2 to D4 are disposed) and the differences in modes of electrical connection to the diodes D2 to D4 (to be described later).

In this embodiment, for example, the substrate 81-1 is a multilayer substrate, as illustrated in FIGS. 5 to 7. As an example, the substrate is assumed to have a six-layer structure, and each of L1 to L6 denotes a corresponding layer of the six layers in FIGS. 6 and 7.

For example, the substrate 81-1 is a glass epoxy multilayer substrate in which the chip of the diode D1 is embedded. Note that while the diode D1 is embedded in the L3 layer of the substrate 81-1 in the illustrated example, the diode D1 may be embedded in another inner layer (the L2 layer, the L4 layer, or the L5 layer).

The substrate 81-1 includes notches 811 to 814 at the outer periphery thereof. The notches 811 to 814 may be arranged at 90-degree intervals, as illustrated in FIG. 5. While the notches 811 to 814 may have any shape, each notch may be formed by punching out a rectangle from the circular outer periphery when viewed in the axial direction, as illustrated in FIG. 5. Conductor patterns 821 to 824 are formed along the notches 811 to 814, respectively.

The conductor pattern 821 is electrically connected to a wiring member (one of wiring members 91 to 94 to be described later) fitted into the notch 811. Similarly, the conductor pattern 822 is electrically connected to a wiring member (one of the wiring members 91 to 94 to be described later) fitted into the notch 812. The conductor pattern 823 is electrically connected to a wiring member (one of the wiring members 91 to 94 to be described later) fitted into the notch 813. The conductor pattern 824 is electrically connected to a wiring member (one of the wiring members 91 to 94 to be described later) fitted into the notch 814. Note that each of the conductor patterns 821 to 824 may be joined to the related wiring member of the wiring members 91 to 94 to be described later through solder or the like.

The conductor patterns 821 to 824 are formed on the front surface (L1) and the back surface (L6) in such a way as to penetrate the substrate 81-1. The conductor pattern 821 is electrically connected to the cathode of diode D1 in the inner layers (from L2 to L5), as illustrated in FIG. 7. The conductor pattern 822 is electrically connected to the anode of the diode D1 in the inner layers, as illustrated in FIG. 6. The conductor patterns 823 and 824 are not electrically connected to anything in particular in the inner layers. The details of the functions of the conductor patterns 821 to 824 are described later.

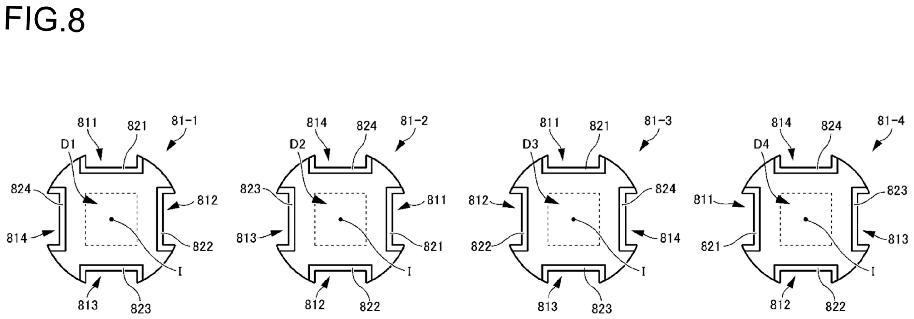

FIG. 8 is a plan view viewed from the X1 side, illustrating the arrangement (the orientations and the positions in the rotational direction) of the substrates 81-1 to 81-4.

As illustrated in FIG. 8, the substrate 81-2 is disposed in the same front-back relationship and in a rotational angle relationship resulting from a 90-degree clockwise rotation relative to the substrate 81-1. The same front-back relationship refers to a relationship that the L1 layer of the substrate 81-2 is positioned on the X1 side.

The substrate 81-3 is disposed in a reversed front-back relationship and in a rotational angle relationship resulting from positioning the notch 811 at the same angular position relative to the substrate 81-1. The reversed front-back relationship refers to a relationship that the L1 layer of substrate 81-3 is positioned on an X2 side.

The substrate 81-4 is disposed in a reversed relationship and in a rotational angle relationship resulting from a 90-degree counterclockwise rotation of the notch 811 relative to the substrate 81-1.

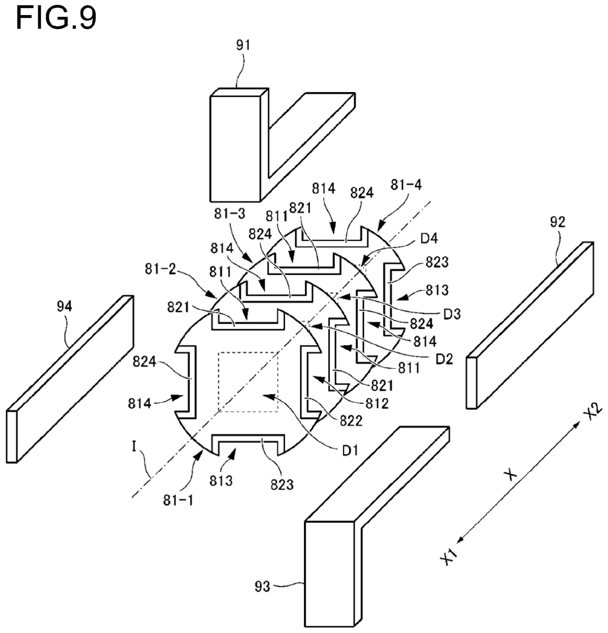

FIG. 9 is a diagram illustrating the wiring members 91 to 94 fixed to the respective notches 811 to 814 of the substrates 81-1 to 81-4. In FIG. 9, the arrangement of the substrates 81-1 to 81-4 correspond to the arrangement illustrated in FIG. 8.

The wiring members 91 to 94 are fixed to the substrates 81-1 to 81-4. The wiring members 91 to 94 take the form of conductor members. For example, the wiring members 91 to 94 may take the form of metal plates referred to as bus bars. Further, the wiring members 91 to 94 may partially include insulated conductor wires such as coil wires.

The wiring member 91 is fixed to the substrates 81-1 to 81-4 in such a way as to fit into the notch 811 of the substrate 81-1.

In this embodiment, the substrates 81-1 to 81-4 are provided in the arrangement as illustrated in FIG. 8. In this case, notches located at the same rotational position as the notch 811 of substrate 81-1 are the notch 814 of the substrate 81-2, the notch 811 of the substrate 81-3, and the notch 814 of the substrate 81-4.

Accordingly, the wiring member 91 is electrically connected to the conductor pattern 821 on the substrate 81-1, to the conductor pattern 824 on the substrate 81-2, to the conductor pattern 821 on the substrate 81-3, and to the conductor pattern 824 on the substrate 81-4.

An X1-side end of the wiring member 91 is electrically connected to a terminal 3161 of the rotor coil 316 of the rotating electric machine 3 (see FIG. 3).

Consequently, the wiring member 91 can electrically connect the cathodes of the diodes D1 and D3 to the terminal 3161 of the rotor coil 316 of the rotating electric machine 3 through the substrates 81-1 and 81-3.

Note that the wiring member 91 only needs to be electrically connected to the substrates 81-1 and 81-3; and in a modified example, the wiring member 91 may not extend to the substrate 81-4.

The wiring member 92 is fixed to the substrates 81-1 to 81-4 in such a way as to fit into the notch 812 of the substrate 81-1.

Similarly, notches located at the same rotational position as the notch 812 of the substrate 81-1 are the notch 811 of the substrate 81-2, the notch 814 of the substrate 81-3, and the notch 813 of the substrate 81-4.

Accordingly, the wiring member 92 is electrically connected to the conductor pattern 822 on the substrate 81-1, to the conductor pattern 821 on the substrate 81-2, to the conductor pattern 824 on the substrate 81-3, and to the conductor pattern 823 on the substrate 81-4.

An X1-side end of the wiring member 92 is electrically connected to a terminal 7421 of the secondary coil 742 of the transformer Tr.

Consequently, the wiring member 92 can electrically connect the anode of the diode D1 and the cathode of the diode D2 to the terminal 7421 of the secondary coil 742 of the transformer Tr through the substrates 81-1 and 81-2.

Note that the wiring member 92 only needs to be electrically connected to the substrates 81-1 and 81-2; and in a modified example, the wiring member 92 may not extend to the substrates 81-3 and 81-4.

The wiring member 93 is fixed to the substrates 81-1 to 81-4 in such a way as to fit into the notch 813 of the substrate 81-1.

Similarly, notches located at the same rotational position as the notch 813 of the substrate 81-1 are the notch 812 of the substrate 81-2, the notch 813 of the substrate 81-3, and the notch 812 of the substrate 81-4.

Accordingly, the wiring member 92 is electrically connected to the conductor pattern 823 on the substrate 81-1, to the conductor pattern 822 on the substrate 81-2, to the conductor pattern 823 on the substrate 81-3, and to the conductor pattern 822 on the substrate 81-4.

An X1-side end of the wiring member 93 is electrically connected to a terminal 3162 of the rotor coil 316 of the rotating electric machine 3 (see FIG. 3).

Consequently, the wiring member 93 can electrically connect the anodes of the diodes D2 and D4 to the terminal 3162 of the rotor coil 316 of the rotating electric machine 3 through the substrates 81-2 and 81-4.

The wiring member 94 is fixed to the substrates 81-1 to 81-4 in such a way as to fit into the notch 814 of the substrate 81-1.

Similarly, notches located at the same rotational position as the notch 814 of the substrate 81-1 are the notch 813 of the substrate 81-2, the notch 812 of the substrate 81-3, and the notch 811 of the substrate 81-4.

Accordingly, the wiring member 94 is electrically connected to the conductor pattern 824 on the substrate 81-1, to the conductor pattern 823 on the substrate 81-2, to the conductor pattern 822 on the substrate 81-3, and to the conductor pattern 821 on the substrate 81-4.

An X1-side end of the wiring member 94 is electrically connected to a terminal 7422 of the secondary coil 742 of the transformer Tr.

Consequently, the wiring member 94 can electrically connect the anode of the diode D3 and the cathode of the diode D4 to the terminal 7422 of the secondary coil 742 of the transformer Tr through the substrates 81-3 and 81-4.

Thus, optimization of the arrangement of the substrates 81-1 to 81-4 allows the conductor patterns 821 to 824 to be connected to appropriate connection targets (appropriate connection targets for implementing the rectifying circuit 652) while utilizing the substrates 81-1 to 81-4 with the same substrate configuration.

Note that connection modes of the conductor patterns 821 to 824 are as follows in the above configuration.

The conductor pattern 821 is electrically connected to the cathode of the diode D1 in the inner layers of the substrate 81-1, as illustrated in FIG. 7. While not being illustrated, the conductor pattern 821 is electrically connected to the cathode of the diode D1 in the inner layers of the substrate 81-3. While not being illustrated, the conductor pattern 821 is not electrically connected to anything in particular in the inner layers of the substrate 81-2 and the inner layers of the substrate 81-4.

The conductor pattern 822 is electrically connected to the anode of the diode D1 in the inner layers of the substrate 81-1, as illustrated in FIG. 6. While not being illustrated, the conductor pattern 822 is electrically connected to the cathode of the diode D2 in the inner layers of the substrate 81-2. While not being illustrated, the conductor pattern 822 is not electrically connected to anything in particular in the inner layers of the substrate 81-3 and the inner layers of the substrate 81-4.

The conductor pattern 823 is not electrically connected to anything in particular in the inner layers of the substrate 81-1, as illustrated in FIG. 7. While not being illustrated, the conductor pattern 823 is electrically connected to the anode of the diode D2 in the inner layers of the substrate 81-2. While not being illustrated, the conductor pattern 823 is electrically connected to the anode of the diode D4 in the inner layers of the substrate 81-3. While not being illustrated, the conductor pattern 823 is not electrically connected to anything in particular in the inner layers of the substrate 81-4.

The conductor pattern 824 is not electrically connected to anything in particular in the inner layers of the substrate 81-1 as illustrated in FIG. 6 and the inner layers of the unillustrated substrate 81-2. While not being illustrated, the conductor pattern 824 is electrically connected to the anode of the diode D3 in the inner layers of the substrate 81-3. While not being illustrated, the conductor pattern 824 is electrically connected to the cathode of the diode D4 in the inner layers of the substrate 81-4.

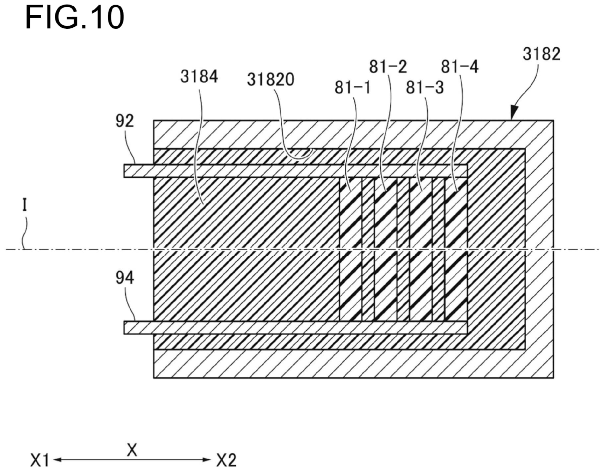

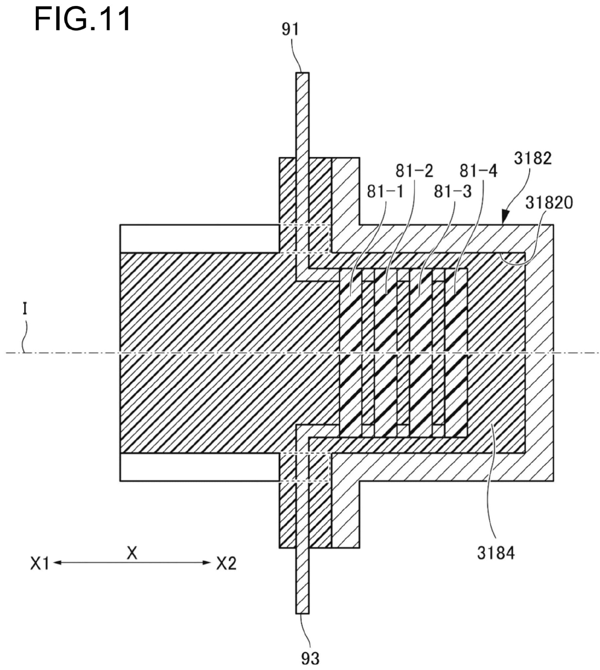

Next, a preferred example of a fixing structure 150 of the substrates 81-1 to 81-4 and the wiring members 91 to 94 in the sub-shaft 3182 is described with reference to FIGS. 10 and 11.

FIGS. 10 and 11 are cross-sectional views of the fixing structure 150. FIG. 10 is a cross-sectional view taken along a section passing through the wiring members 92 and 94 and the central axis I; and FIG. 11 is a cross-sectional view taken along a section passing through the wiring members 91 and 93 and the central axis I. FIGS. 10 and 11 are cross-sectional views taken from directions that are 90 degrees apart around the axis. Note that illustration of the diodes D1 to D4 is omitted in FIGS. 10 and 11.

As illustrated in FIGS. 10 and 11, the sub-shaft 3182 fixes the substrates 81-1 to 81-4 and the wiring members 91 to 94 through the resin-molded portion 3184. Specifically, the substrates 81-1 to 81-4 and the wiring members 91 to 94 that are disposed in the recessed portion 31820 of the sub-shaft 3182 are fixed by a resin material (molding resin) injected into the recessed portion 31820. Consequently, the fixing strength of the substrates 81-1 to 81-4 (and the diodes D1 to D4 mounted thereon) and the wiring members 91 to 94 can be enhanced. As a result, the possibility of detachment from the rotor shaft 318 due to the effect of centrifugal force can be effectively reduced. Further, accommodating the substrates 81-1 to 81-4 (and the diodes D1 to D4 mounted thereon) and the wiring members 91 to 94 in the recessed portion 31820 can effectively reduce the possibility of radially outward detachment of the substrates and the wiring members from the rotor shaft 318.

The wiring members 92 and 94 extend linearly in the axial direction with the X1-side ends being exposed from the resin-molded portion 3184, as illustrated in FIG. 10. The exposed X1-side ends of the wiring members 92 and 94 are joined to the terminals 7421 and 7422. The wiring members 91 and 93 take an L-shaped form the X1 side of which bends radially outward, as illustrated in FIG. 11. The radially outward ends of the wiring members 91 and 93 are exposed from the resin-molded portion 3184 and are joined to the terminals 3161 and 3162.

Note that during attachment, the wiring members 91 to 94 may be disposed in the recessed portion 31820 while being attached to the substrates 81-1 to 81-4.

While the embodiments have been described above, this disclosure is not limited to specific embodiments, and various modifications and changes may be made within the scope described in the claims. Further, all or some of the components of the aforementioned embodiments may also be combined.

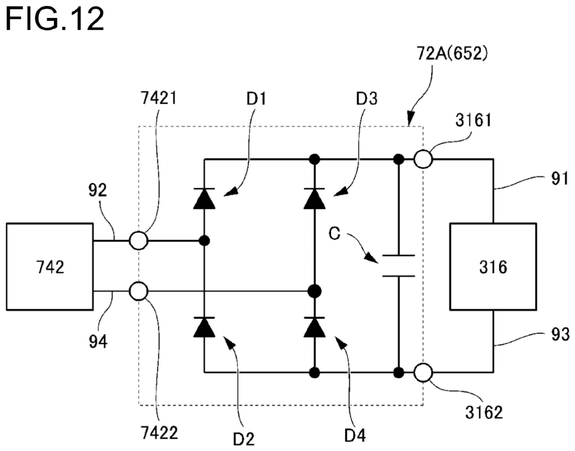

For example, while the rectifying device 72 is configured with the diodes D1 to D4 in the aforementioned embodiment, the rectifying device is not limited thereto. For example, a capacitor C may be further included, as is the case in a rectifying device 72A illustrated in FIG. 12. In this case, the capacitor C may also be embedded in a separate substrate (not illustrated) and be disposed at a position penetrated by the central axis I, similarly to the diodes D1 to D4.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A contactless wound-field rotor comprising:
a rotor shaft (318);
a rotor core (312) around which a coil wire is wound; and
a power receiving device (70) receiving power supply in a contactless manner from a power supply device on a non-rotating side, wherein
the power receiving device (70) includes
a plurality of rectifying elements (D1 to D4) arranged in an axial direction in such a way as to extend through a rotation axis (I) of a rotor (310), and
a wiring member (91 to 94) electrically connecting the power supply device and the coil wire through the rectifying element (D1 to D4).

2. The contactless wound-field rotor according to Claim 1, wherein a plurality of the rectifying elements (D1 to D4) are embedded in a substrate (81).

3. The contactless wound-field rotor according to Claim 1, wherein
the power receiving device (70) further includes a plurality of substrates (81) arranged in an axial direction in an orientation in which a direction normal to a substrate surface matches the axial direction,
each of a plurality of the rectifying elements (D1 to D4) is provided on one related substrate (81) of a plurality of the substrates (81) in such a way as to extend through a rotation axis (I) of a rotor (310),
the wiring member (91 to 94) takes a form of an axially extending conductor member, and
the wiring member (91 to 94) is electrically connected to a plurality of the rectifying elements (D1 to D4) on a radially outer side of a plurality of the substrates (81).

4. The contactless wound-field rotor according to Claim 3, wherein
the rotor shaft (318) includes, at an axial end, an axially recessed portion (31820) penetrated by a rotation axis (I) of a rotor (310), and
a plurality of the substrates (81) and the wiring member (91 to 94) are resin molded in the recessed portion (31820).
